# EUROPEAN PATENT APPLICATION

(11) **EP 2 039 490 A2**
(43) Date of publication of application: **25.03.2009**
(21) Application number: 08165049.1
(22) Date of filing: 24.09.2008
(51) Int. Cl.: B29C 44/36, B29B 7/74

(54) **Dispensing apparatus.**

(30) Priority: 24.09.2007 BE 200700455
(71) Applicant: Soudan, Freddy, 9800 Deinze (BE)
(72) Inventor: Soudan, Freddy, 9800 Deinze (BE)
(74) Representative: Quintelier, Claude

(57) **Abstract**

Dispensing apparatus (1), in particular a dispensing gun, comprising a first and a second inlet intended for the pressurized supply of a first and a second foam component respectively, which first and second inlets are each closably connected with a mixing chamber (4) intended for mixing the first and second components, in which mixing chamber (4) is arranged a removal element (8) for removal of the foaming substance formed by mixing the first and second component, wherein the dispensing apparatus (1) comprises a storage chamber (17) for the pressurized storage of a solvent, in which storage chamber (17) the removal element (8) is arranged displaceably.

## Description

The invention relates to an dispensing apparatus comprising a first and a second inlet intended for the pressurized supply of a first and a second component respectively, which first and second inlets are each closably connected with a mixing chamber intended for mixing the first and second component, in which mixing chamber is arranged a removal element for removal of a foaming substance formed by mixing the first and second component.

Such a dispensing apparatus is known from US patent 5 375 743 to which reference is hereby made. In the known dispensing apparatus the components to be mixed, mainly urethane polyol and a hardener with a boiling point below 0°C, are mixed together under pressure in the mixing chamber. The components are supplied to the mixing chamber under pressure as both components are stored in separate closed pressure vessels. Supply takes place via closable chambers which are closed via a valve which can be operated manually or automatically. The mixing chamber is fitted with metering apertures which can be closed by means of said valve and are preferably made of hardened or stainless steel, and the metering opening of which is precisely calibrated. By mixing the two components a foam is formed in accordance with a known exothermic reaction. When the two components are mixed in the mixing chamber and exposed to atmospheric pressure, there is always a sudden transition from the fluid phase to the gas phase for the gases present in the components. This purely physical process ensures a pre-expansion of the two components separately. This expansion causes the intense mixing of the two components, wherein the known exothermic reaction proceeds further.

The foam thus formed can be used for various purposes such as for example fixing doors and windows, insulation and packing, and spraying of walls or floors. To prevent clogging of the valve in the mixing chamber and the opening, a solvent must be administered to the chambers regularly. Furthermore the shaft with which the mixing chamber is opened and closed must be cleaned and lubricated.

Because foam is formed in the mixing chamber, it is possible that microscopic particles will settle on the shaft which opens and closes the mixing chamber. Said microscopic particles can also be precipitated in the metering opening or on the valve. This means it cannot be excluded that these particles, due to their accumulation, can lead to a blockage of the dispensing apparatus. To remedy this, the apparatus is cleaned regularly, for example using a solvent which also serves as a lubricant for the shaft. In the known apparatuses sometimes a solvent chamber is provided, but this contains only a small quantity of solvent so that after a few hundred movements of the shaft, this can already run dry and hence lead to blockage of the apparatus. It is also known to provide an external opening through which a small quantity of solvent is applied to the shaft, for example by means of a pipette or injection needle.

One disadvantage of the known apparatuses is that the solvent is administered at the initiative of the user. The latter may sometimes forget, which can lead to an inevitable seizing of the dispensing apparatus.

The object of the invention is to produce a dispensing apparatus wherein the dispensing of solvent no longer takes place at the initiative of the user.

A dispensing apparatus according to the invention has the feature that the dispensing apparatus has a storage chamber for pressurized storage of a solvent, in which storage chamber the removal element is arranged displaceably. By use of a storage chamber with pressurized solvent, the solvent is delivered regularly by means of the removal element without any action being required from the user.

A first preferred embodiment of a dispensing apparatus according to the invention has the feature that said first and second inlets are fitted with a closure element connected with a pressure element, which pressure element is intended for activating the closure element, and wherein the storage chamber is connected with the closure element for pressurized dispensing of the solvent. As a result the pressure element serves both the closure element and the storage chamber, whereby a correlation is achieved between operation of the closure element and dispensing of the solvent.

The invention will be described in more detail below with reference to the embodiment example given in the drawing. The drawing shows :
Fig. 1 an example of a dispensing apparatus according to the invention;
Fig. 2 a cross-section through the mixing chambers in closed state; and
Fig. 3 a cross-section through the mixing chambers in open state.

In the drawing the same or similar elements carry the same reference numerals.

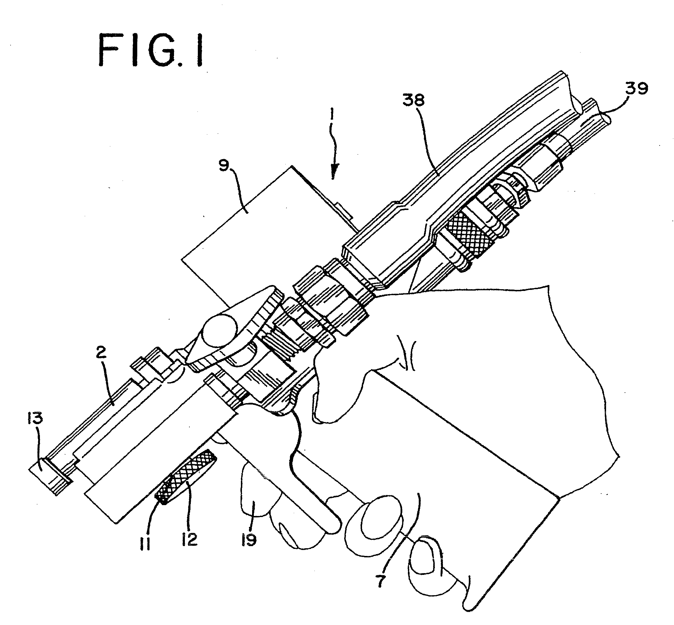

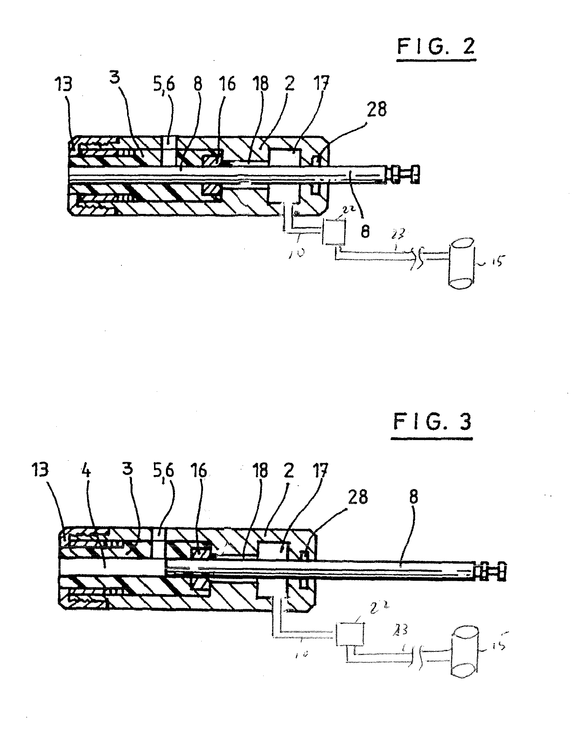

Figures 1 and 2 show an example of a dispensing element 1 according to the invention. The dispensing element 1, preferably formed as a dispensing gun, comprises a cylinder 2 in which is arranged a mixing chamber 4. The latter has a first and a second inlet, preferably formed by a supply channel 5, 6 for the pressurized supply of a first and a second foam component respectively. The components are preferably urethane polyol and a hardener, in order to form by mixing a polyurethane foam. Instead of a manually operated dispensing gun (19) it is also possible to use an automatic gun controlled for example by a microprocessor.

The cylinder 2 is preferably detachably mounted on a carrier or handle 7. Traversing the mixing chamber is a removal element 8, preferably formed by a shaft, which is arranged displaceably therein. The removal element is driven by a pressure element such as a pneumatic or electrical power source between a first position in which the components can flow through the supply channels and into the mixing chamber, and a second position in which the supply channels are closed and the mixed foaming substance is removed from the mixing chamber. A fixing element 12 is provided for detachable mounting of the cylinder 2. In another embodiment the fixing element is formed by a bracket. Supply hoses 38 and 39 provide the foaming components.

The supply channels 5 and 6 are fitted with calibrated metering apertures which for example can be closed by flaps. The latter are mounted between the supply hose and the mixing chamber to keep the components separate until they enter the mixing chamber 4. These flaps, or in general closure elements, can also be operated by the pressure element 9. A cap 13 can if desired be provided on the end of the cylinder to close this. An alignment ring 16, preferably made of stainless steel, is arranged centrally in the cylinder. The alignment ring forms the transition between the mixing chamber and a space 18 arranged coaxially around the shaft 8 in a section between the mixing chamber 4 and a storage chamber 17 which is intended to store a solvent, for example Mesamoll (registered trademark). The mixing chamber is formed by the space in the cylinder 2 which is not taken up by the shaft 8 when this is in its retracted state, as shown in figure 3. The shaft 8 is thus mounted at its ends and in the centre, whereby its axial movement is guided. An O-ring 28 ensures the seal of the closing shaft 8.

The storage chamber 17 is intended for pressurized storage of the solvent. This pressure is higher than that predominating in the mixing chamber when the apparatus is in operation. The storage chamber is connected via a line 10 with a pump 22 which is operated either by the pressure element 9 or by means of a separate control such as for example a microprocessor. This can also monitor the pressure in the storage chamber and drive the pump 22 if the pressure in the storage chamber falls below a specific value, in order to pump the solvent into the storage chamber. A pump inlet is connected via a line 23 with a reservoir 15 in which a stock of solvent is stored.

When the dispensing apparatus is operated, the pressure element 9 is activated, whereby the shaft 8 is activated. The pump 22 is activated if the pressure in the storage chamber is too low, whereby a quantity of solvent can flow from the reservoir 15 to the storage chamber 17. As a result the storage chamber is placed under pressure. This quantity is preferably very small, for example a droplet. By this addition of solvent to the storage chamber, the pressure there is increased. When the mixing chamber is opened by the retraction movement of the shaft, the supply channels are opened. Operation of the apparatus ensures that the valves can be opened, whereby the components can flow to the metering apertures. As the shaft is retracted, the components can flow via the metering apertures into the mixing chamber. During the retraction of the shaft therefore a higher pressure is present in the storage chamber than in the mixing chamber. Any leak along the cylinder wall at the end thereof and at the start of the storage chamber can therefore only lead to a leak of the storage chamber towards the end of the cylinder, as the pressure in the storage chamber is higher than in the mixing part of the mixing chamber. The pneumatic pressure on the mixing chamber is sustained after the end of foaming. Thus from the back of the shaft, no component can penetrate the inside of the storage chamber, a phenomenon which occurs when mixing chambers are worn to some extent.

As a variant a lubricating pump can be activated on each movement (opening and/or closing) of the mixing chamber, or the pressure element can be activated by the system at a particular rhythm. It is not necessary for a quantity of solvent to be pumped into the storage chamber on each movement of the shaft 8. It is important that the solvent is kept under pressure in the storage chamber. Because either the removal element or the shaft 8 is moving in the storage chamber, on each movement this shaft is moistened with the solvent present in the storage chamber without the intervention of the user. Because the shaft also moves in the mixing chamber, it always introduces the solvent there, whereby the microparticles which occur on forming of the foam firstly cannot easily stick to the shaft and secondly solvent is introduced into the mixing chamber, whereby the metering apertures are kept clean.

## Claims

1. Dispensing apparatus, in particular a dispensing gun, comprising a first and a second inlet intended for the pressurized supply of a first and a second foam component respectively, which first and second inlets are each closably connected with a mixing chamber intended for mixing the first and the second component, in which mixing chamber is arranged a removal element for removing a foaming substance formed by mixing the first and second component, **characterized in that** the dispensing apparatus has a storage chamber for the pressurized storage of a solvent, in which storage chamber the removal element is displaceably arranged.

2. Dispensing apparatus according to claim 1, **characterized in that** said first and second inlets are fitted with a closure element connected with a pressure element, which pressure element is intended for activating the closure element and whereby the storage chamber is connected with the closure element for the pressurized dispensing of the solvent.

3. Dispensing apparatus according to claim 2, **characterized in that** the pressure element is connected with a pump connected with the storage chamber, which pump can be operated by the pressure element.

4. Dispensing apparatus according to any one of claims 1 to 3, **characterized in that** in use the pressure of the storage chamber is higher than in the mixing chamber.

5. Dispensing apparatus according to claim 3, **characterized in that** the pump is connected with a reservoir for storage of solvent.

6. Dispensing apparatus according to any of claims 1 to 5, **characterized in that** the removal element is formed by a shaft.
